# EUROPEAN PATENT SPECIFICATION

(11) **EP 3 402 854 B1**
(45) Date of publication and mention of the grant of the patent: **29.07.2020**
(21) Application number: 17704108.4
(22) Date of filing: 09.01.2017
(51) Int. Cl.: C09J 4/06, C09J 133/06

(54) **PRESSURE-SENSITIVE ADHESIVE COMPOSITION AND ARTICLE THEREOF**
HAFTKLEBSTOFFZUSAMMENSETZUNG UND ARTIKEL DARAUS
COMPOSITION ADHÉSIVE SENSIBLE À LA PRESSION ET ARTICLE ASSOCIÉ

(30) Priority: 13.01.2016 CN 201610020765
(43) Date of publication of application: 21.11.2018
(73) Proprietor: 3M Innovative Properties Company, St. Paul, MN 55133-3427 (US)
(72) Inventor: ZHANG, Yunshu, Shanghai 200336 (CN); JIANG, Xiaoming, Shanghai 200336 (CN); WANG, Shujun J., Saint Paul Minnesota 55133-3427 (US); CHEN, Zhong, Saint Paul Minnesota 55133-3427 (US)
(74) Representative: Mathys & Squire
(86) International application number: PCT/US2017/012675
(87) International publication number: WO 2017/123488

(56) References cited:
- US-A1- 2009 229 733
- US-A1- 2010 099 317
- US-A1- 2010 272 942
- US-A1- 2012 184 680

## Description

### CROSS REFERENCE TO RELATED APPLICATION

This application claims the benefit of Chinese Patent Application No. 201610020765.0, filed January 13, 2016.

### TECHNICAL FIELD

The present invention according to present claims 1 to 12 relates to a pressure-sensitive adhesive composition and a pressure-sensitive adhesive sheet article prepared using the same.

### BACKGROUND

Pressure-sensitive adhesive tape can be seen everywhere in homes and work places. In the simplest configuration, a pressure-sensitive adhesive tape has an adhesive and a back lining, the entire configuration thereof is adhesive at a usage temperature, and the pressure-sensitive adhesive tape can be adhered to various substrates to form a bond using only an appropriate pressure. In this way, the pressure-sensitive adhesive tape forms a complete, self-sustaining adhesive system.

According to the Association of Pressure-sensitive Adhesive Tapes, it is known that a pressure-sensitive adhesive (PSA) has the following properties: (1) it has a strong and long-lasting adhesion; (2) it can be adhered using pressure not exceeding finger pressure; (3) it has sufficient ability to be fixed on a substrate; and (4) the cohesion strength is sufficient such that it can be cleanly removed from the substrate A material which has been found to sufficiently act as the PSA including a polymer designed and formulated to exhibit a required viscoelastic property which achieves a balance between an expected adhesion force and a cohesive strength. Features of a PSA are characterized in that it is tackifying at room temperature (i.e., 20°C). A PSA does not include a composition which merely has adhesion or can only be adhered to a certain surface.

US 2010/099317, US 2010/272942, US 2009/229733 and US 2012/184680 relate to PSA compositions and sheets thereof based on further (meth)acrylate copolymer and oligomers and optionally comprising also tackifying resins.

In a portable electronic device, many parts are assembled using a PSA tape or a PSA sheet, which requires that the PSA tape or PSA sheet is as thin as possible so as to meet the "thinner, lighter and smarter" trend of the electronic market. However, as the adhesive layer gets thinner, the conventional requirements, such as high temperature holding strength and large adhesion strength, become more and more difficult to be achieved. Furthermore, when a thin adhesive layer is bonded to a curved-surface substrate or a flexible printed circuit (FPC) board, since a repulsive force of a curved part or flexible part employs an additional stress, unfortunately a lamination (warping) problem would happen, especially at high temperature. Moreover, when the curved substrate is a transparent plastic substrate, i.e., polycarbonate plates, adhesion failure is more likely to occur at the interface because such plastic substrates often generate out-gassing bubbles at high temperature, whereby not only the transparency is reduced, but also the adhesion drastically deteriorates. The industry has made many efforts to improve the anti-warping properties of pressure-sensitive adhesives and pressure-sensitive adhesive tapes used for adhering plastic polyester substrates, however, the result is still not satisfactory.

### SUMMARY

Therefore, a new pressure-sensitive adhesive composition is needed, that also has a high peel force at room temperature and good cohesion strength at high temperature and has excellent anti-warping and anti-bubbling properties.

The present invention provides a pressure-sensitive adhesive composition, which comprises 1) a high-molecular-weight and low-glass-transition-temperature (Tg) acrylate copolymer having a side carboxyl, 2) a low-molecular-weight and a high-Tg acrylate oligomer, and 3) a terpene tackifying resin.

In a first aspect of the present invention, a composition related to a pressure-sensitive adhesive includes acrylate copolymers having a side carboxyl, formed by a first monomer mixture containing a carboxyl-containing monomer, wherein, the content of the carboxyl-containing monomer is 0.1-10 wt. % based on the total weight of the first monomer mixture for forming the acrylate copolymer having the side carboxyl, the glass transition temperature Tg of the acrylate copolymer having the side carboxyl is greater than or equal to -50°C and less than or equal to -30°C. The pressure-sensitive adhesive composition further comprises 1-25 wt. % of acrylate oligomers based on the total weight of the acrylate copolymer containing a carboxyl-containing monomer and the acrylate oligomer, wherein the acrylate oligomers have a weight-average molecular weight greater than or equal to 20,000 Da and a glass transition temperature Tg greater than or equal to 80°C, and 1-20 wt. % of a terpene tackifying resin based on the total weight of the acrylate copolymer having the side carboxyl and the acrylate oligomer.

In a second aspect of the present invention, an article related to the pressure-sensitive adhesive (i.e., a pressure-sensitive adhesive article) includes a substrate and a pressure-sensitive adhesive layer, as above-mentioned in the foregoing first aspect of the present invention, applied to at least one surface of the substrate.

In a third aspect, the article related to the pressure-sensitive adhesive (i.e., a pressure-sensitive adhesive article) includes a substrate and pressure-sensitive adhesive layers mentioned in the first aspect of the present invention, applied to two surfaces of the substrate.

It has been found by the present invention that exceptional anti-warping and anti-bubbling properties are realized especially at high temperature by combining the high-molecular-weight and low-glass-transition-temperature (Tg) acrylate copolymers having the side carboxyl with the low-molecular-weight and high-Tg acrylate oligomers having the side carboxyl. According to the understanding of the inventor, the mechanism of the present invention is substantially as follows: the acrylate oligomers therein are partially compatible with the acrylate copolymers having the side carboxyl and nano-scale domains can be formed therein. The micro-phase separated domains can be tightly adhered to a substrate at high temperature. The high-Tg domains can separate a high-Tg portion from a low-Tg portion, such that the low-Tg portion is softer and sliding of the adhesive (i.e., moving of the adhesive) is avoided when a pressure-sensitive adhesive tape made therefrom is quickly stripped off. In addition, the acrylate copolymers having the side carboxyl and the acrylate oligomers having the side carboxyl can be cross-linked by using a crosslinking agent, and thereby the compactness of the arrangement of high-molecular chains is improved, thereby enhancing anti-warping and anti-bubbling properties thereof. Therefore, during adhesion to polyester plastic substrates which are easily deformed, the pressure-sensitive adhesive composition has high peel force at room temperature and excellent cohesive strength at high temperature, such as 70°C, and also has anti-warping and anti-bubbling properties.

### DETAILED DESCRIPTION

It should be understood that one skilled in the art could conceive of various other embodiments according to the teaching of the description and make modifications thereto without departing from the scope and spirit of the present invention. Therefore, the following embodiments are not intended to be limiting.

Unless otherwise clearly indicated, all figures expressing characteristic dimensions, numbers/amounts and physical characteristics in the description and claims shall be understood as being modified by term "about" in all situations. Therefore, unless otherwise stated, numerical parameters listed in the description and the attached claims are approximate values, and one skilled in the art could properly change the approximate values according to desired characteristics to be realized using the teaching disclosed herein. Numerical ranges expressed by end points include all figures within the ranges and any range within the ranges. For example, 1, 2, 3, 4 and 5 include 1, 1.1, 1.3, 1.5, 2, 2.75, 3, 3.80, 4, 5, and so on.

### Definitions

Unless otherwise clearly indicated, terms used in the text have the following meanings:
The term "alkyl" refers to a linear chain or branched chain alkyl containing a designated number of carbon atoms. The alkyl can contain 1-20, preferably 1-12, more preferably 1-8, even more preferably 1-6 or 1-3 carbon atoms. Examples of an alkyl include, but are not limited to methyl, ethyl, n-propyl, isopropyl, n-butyl, isobutyl, tert-butyl, n-pentyl, cyclopentyl, cyclohexyl, ethylhexyl, n-capryl, n-heptyl, cycloheptyl, adamantyl, norbornyl, and the like. Unless otherwise clearly indicated, alkyl groups can be monovalent or multivalent.

The term "(meth)acrylate" refers to acrylate, methacrylate, or both. Likewise, the term "(meth)acrylic acid" refers to acrylic acid, methacrylic acid, or both.

### Pressure-sensitive adhesive composition

The pressure-sensitive adhesive composition provided by the present invention can be prepared in ultrathin pressure-sensitive adhesive tapes or pressure-sensitive adhesive sheets, has high peel force at room temperature and high cohesive strength at high temperature and has comparatively ideal anti-warping and anti-bubbling properties. Especially, when adhered to substrates made from plastic polyester materials, the pressure-sensitive adhesive provided by the present invention still has high peel force at room temperature and good cohesion strength at high temperature. The pressure-sensitive adhesive composition comprises reaction products of the following reaction components: acrylate copolymers having the side carboxyl, wherein the acrylate copolymer is formed by a first monomer mixture containing 0.1-10 wt. % of carboxyl-containing monomer based on the total weight of first monomer mixture for forming the acrylate copolymer having the side carboxyl, the glass transition temperature Tg of the acrylate copolymer having the side carboxyl is greater than or equal to -50 °C and is less than or equal to -30°C; 1-25 wt. % of an acrylate oligomer based on the total weight of the acrylate copolymers having the side carboxyl and the acrylate oligomer, wherein the weight-average molecular weight of the acrylate oligomer is greater than or equal to 20,000 Da and the glass transition temperature Tg thereof is greater than or equal to 80 °C; and 1-20 wt. % of a terpene tackifying resin based on the total weight of the acrylate copolymers having the side carboxyl and the acrylate oligomer.

The glass transition temperature Tg of the acrylate copolymer having the side carboxyl is greater than or equal to -50 °C and is less than or equal to -30°C. In certain embodiments, the glass transition temperature Tg of the acrylate copolymers having the side carboxyl is at least -48°C, at least -45°C, at least -40°C, at least -35°C. In certain embodiments, the glass transition temperature Tg of the acrylate copolymer having the side carboxyl is at most -32°C, at most -35°C.

The weight-average molecular weight of the acrylate copolymer having the side carboxyl is preferably 400,000-3,000,000 Da, and more preferably 500,000-1,500,000 Da. In certain embodiments, the weight-average molecular weight of the acrylate copolymer having the side carboxyl is at least 400,000 Da, at least 500,000 Da, at least 600,000 Da, at least 700,000 Da, at least 800,000 Da, at least 900,000 Da, at least 1,000,000 Da. In certain embodiments, the weight-average molecular weight of the acrylate copolymer having the side carboxyl is at most 3,000,000 Da, at most 2,500,000 Da, at most 1,500,000 Da, at most 1,000,000 Da. When the weight-average molecular weight of the acrylate copolymer having the side carboxyl is less than 400,000 Da, the cohesive strength of the obtained pressure-sensitive adhesive composition is insufficient and good anti-warping properties cannot be obtained. When the weight-average molecular weight of the acrylate copolymer having the side carboxyl is greater than 3,000,000 Da, it is not easy to obtain good wettability and peel force for the pressure-sensitive adhesive composition.

In some embodiments, the content of the carboxyl-containing monomers is 0.1-10 wt. % based on the total weight of the first monomer mixture for forming the acrylate copolymer having the side carboxyl. In certain embodiments, the content of the carboxyl-containing monomers is at least 0.1 wt. %, 0.5 wt. %, at least 1 wt. %, at least 2 wt. %, at least 4 wt. %, at least 6 wt. %, at least 8 wt. % based on the total weight of the first monomer mixture. In certain embodiments, the content of the carboxyl-containing monomers is at most 10 wt. %, at most 9 wt. %, at most 8 wt. %, at most 6 wt. %, at most 5 wt. % based on the total weight of the first monomer mixture.

As another embodiment, the first monomer mixture for forming the acrylate copolymer having the side carboxyl further includes 0-5 wt. % of nitrogen-containing monomers based on the total weight of the first monomer mixture. In certain embodiments, the content of the nitrogen-containing monomer in the first monomer mixture is at least 0.1 wt. %, at least 0.5 wt. %, at least 1 wt. %, at least 1.5 wt. %, at least 2 wt. %, at least 2.5 wt. %, and at least 3wt. % based on the total weight of the first monomer mixture for forming the acrylate copolymer having the side carboxyl. In certain embodiments, the content of the nitrogen-containing monomer in the monomer mixture is at most 5 wt. %, at most 4.5 wt. %, at most 4 wt. %, at most 3.5 wt. %, at most 3 wt. %, and at most 2.5 wt. % based on the total weight of the first monomer mixture. If the content of the nitrogen-containing monomers exceeds 5 wt. %, the obtained pressure-sensitive adhesive composition has excessive cohesive strength, the initial tackiness of the prepared pressure-sensitive adhesive sheet is decreased and strip-sliding occurs. The nitrogen-containing monomer can produce an acid and alkali interaction with the carboxyl in the acrylate copolymer or the acrylate oligomer, and thereby the cohesive strength and the anti-bubbling properties of the pressure-sensitive adhesive composition are improved.

Examples of the nitrogen-containing monomers include, but are not limited to at least one or a combination of any two of the following compounds: (meth)acrylonitrile, n-vinyl pyrrolidone, (meth)acryloylmorpholine, cyclohexylmaleimide, isopropylmaleimide, (meth)acrylamide, N, N-dimethyl (meth)acrylamide, and N, N-dimethylaminoethyl (meth)acrylate.

The acrylate copolymers having the side carboxyl can be obtained by polymerizing a first monomer mixture containing the following component (1) as a main component and containing 0.1-10 wt. % of the following component (2).

Component (1) is alkyl (meth)acrylate, wherein the alkyl has 1-18 carbon atoms. In certain embodiments, the number of the carbon atoms contained in the alkyl in the alkyl (meth)acrylate used as component (1) is at least 1, at least 3, at least 5, at least 7, at least 9, and at least 11. In certain embodiments, the number of the carbon atoms contained in the alkyl in the alkyl (meth)acrylate used as component (1) is at most 18, at most 16, at most 14, at most 12, and at most 10.

Specific examples of the (methyl) alkyl acrylate include, but are not limited to any one or a combination of at least any two of the following components: methyl (meth)acrylate, ethyl (meth)acrylate, n-butyl (meth)acrylate, isobutyl (meth)acrylate, sec-butyl (meth)acrylate, tert-butyl (meth)acrylate, amyl (meth)acrylate, neoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, hendecyl (meth)acrylate, dodecyl (meth)acrylate, tridecyl (meth)acrylate, and octadecyl (meth)acrylate. The alkyl that forms an alkyl ester can be a linear chain or branched chain alkyl. Among them, alkyl (meth)acrylate with an alkyl having 4-12 carbon atoms is preferable, and n-butyl acrylate, 2-ethylhexyl acrylate, isooctyl acrylate and isononyl acrylate are more preferable.

Component (2) is a carboxyl-containing monomer, having carboxyl and olefinic unsaturated double bonds. Specific examples of the carboxyl-containing monomers include, but are not limited to any one or a combination of any two of the following compounds: ω-carboxyl-polycaprolactone-(meth)acrylate, mono phthalate of hydroxymethyl (meth)acrylate, mono phthalate of hydroxyethyl (meth)acrylate, mono phthalate of hydroxypropyl (meth)acrylate, mono phthalate of hydroxybutyl (meth)acrylate, mono phthalate of hydroxyamyl (meth)acrylate, mono phthalate of hydroxyhexyl (meth)acrylate, mono phthalate of hydroxyheptyl (meth)acrylate, mono phthalate of hydroxyoctyl (meth)acrylate, mono phthalate of hydroxynonyl (meth)acrylate,, mono phthalate of hydroxy-2-ethylhexyl (meth)acrylate, mono phthalate of hydroxydecyl (meth)acrylate, mono phthalate of hydroxyundecyl (meth)acrylate, mono phthalate of hydroxydodecyl (meth)acrylate,, mono succinate of hydroxymethyl (meth)acrylate, mono succinate of hydroxyethyl (meth)acrylate, mono succinate of hydroxypropyl (meth)acrylate, mono succinate of hydroxybutyl (meth)acrylate, mono succinate of hydroxyamyl (meth)acrylate, mono succinate of hydroxyhexyl (meth)acrylate, mono succinate of hydroxyheptyl (meth)acrylate, mono succinate of hydroxyoctyl (meth)acrylate, mono succinate of hydroxynonyl (meth)acrylate, mono succinate of hydroxy-2-ethylhexyl (meth)acrylate, mono succinate of hydroxydecyl (meth)acrylate, mono succinate of hydroxyundecyl (meth)acrylate, mono succinate of hydroxydodecyl (meth)acrylate, (meth)acrylic acid, itaconic acid, crotonic acid, maleic acid, fumaric acid, isocrotonic acid, and anhydrides thereof, mono hexahydrophthalate of hydroxymethyl (meth)acrylate, mono hexahydrophthalate of hydroxyethyl (meth)acrylate, mono hexahydrophthalate of hydroxypropyl (meth)acrylate, mono hexahydrophthalate of hydroxybutyl (meth)acrylate, mono hexahydrophthalate of hydroxyamyl (meth)acrylate, mono hexahydrophthalate of hydroxyhexyl (meth)acrylate, mono hexahydrophthalate of hydroxyheptyl (meth)acrylate, mono hexahydrophthalate of hydroxyoctyl (meth)acrylate, mono hexahydrophthalate of hydroxynonyl (meth)acrylate, mono hexahydrophthalate of hydroxy-2-ethylhexyl (meth)acrylate, mono hexahydrophthalate of hydroxydecyl (meth)acrylate, mono hexahydrophthalate of hydroxyundecyl (meth)acrylate, and mono hexahydrophthalate of hydroxydodecyl(meth)acrylate.

The content of component (2) is usually 0.1-10 wt. % of the weight of the first monomer mixture. When the content is less than 0.1 wt. %, the obtained pressure-sensitive adhesive composition cannot obtain enough cohesive strength through crosslinking and the prepared pressure-sensitive adhesive sheet has poor anti-warping properties When the content above is greater than 10 wt. %, the obtained pressure-sensitive adhesive composition has excessively high cohesive strength after crosslinking, the initial tackiness of the prepared pressure-sensitive adhesive sheet is decreased and strip-sliding occurs.

With respect to monomer components forming the acrylate copolymers, monomers which can be copolymerized with component (1) and component (2) can be selected according to requirements; for example, monomers with a ring structure such as cyclohexyl (meth)acrylate, isobornyl (meth)acrylate, phenyl (meth)acrylate, phenoxyethyl (meth)acrylate, benzyl (meth)acrylate, styrene monomers, α-methyl styrene, glycidyl (meth)acrylate and vinyl ester monomers such as vinyl acetate.

The acrylate oligomers suitable for the present invention are actually low-molecular-weight and high-glass-transition-temperature acrylate oligomers. The glass transition temperature (Tg) of the acrylate oligomers is greater than or equal to 80°C. In certain embodiments, the Tg of the acrylate oligomers is at least 90°C. In certain embodiments, the Tg of the acrylate oligomers is at most 105°C, at most 100°C, at most 90°C, and at most 80°C.

The weight-average molecular weight of the acrylate oligomers is between 20,000 Da and 100,000 Da. If the Mw of the acrylate oligomers is less than 20,000 Da, the obtained pressure-sensitive adhesive composition cannot obtain enough cohesive strength at high temperature and cannot resist bubbling. The Mw of the acrylate oligomers should not be too high, otherwise compatibility with the acrylate copolymers worsens, macro-phase separated structures are formed and the stability of the obtained pressure-sensitive adhesive sheet is affected. In certain embodiments, the weight-average molecular weight of the acrylate oligomers is at least 20,000 Da, at least 40,000 Da, at least 60,000 Da, and at least 80,000 Da. (In certain embodiments, the weight-average molecular weight of the acrylate oligomers is at most 100,000 Da, at most 90,000 Da, at most 80,000 Da, at most 70,000 Da, and at most 60,000 Da.).

The content of the acrylate oligomers is 1-25 wt. % based on the total weight of the acrylate copolymers having the side carboxyl and the acrylate oligomers. In certain embodiments, the content of the acrylate oligomers is at least 1 wt. %, at least 3 wt. %, at least 5 wt. %, at least 10 wt. %, and at least 15 wt. % based on the total weight of the acrylate copolymers having the side carboxyl and the acrylate oligomers. In certain embodiments, the content of the acrylate oligomers is at most 25 wt. %, at most 20 wt. %, at most 15 wt. %, and at most 10 wt. % based on the total weight of the acrylate copolymers having the side carboxyl. If the content of the contained acrylate oligomers therein is less than 1 wt. %, the anti-warping properties and the tackiness of the prepared pressure-sensitive adhesive sheet decrease. If the content of the contained acrylate oligomers therein is greater than 25 wt. %, the initial tackiness of the prepared pressure-sensitive adhesive sheet is decreased.

The acrylate oligomers can be obtained by polymerizing a second monomer mixture, such as the monomers and compositions in component (1) used in the mentioned acrylate copolymers, the carboxyl-containing monomers and compositions in component (2) used in the acrylate copolymers, nitrogen-containing monomers and compositions thereof, and monomers and compositions which can be copolymerized with component (1) and component (2). Among these, carboxyl-containing monomers are preferable and (meth)acrylic acid is particularly preferable.

In certain embodiments, the acrylate oligomers is formed from a second monomer mixture comprising carboxyl-containing monomers. In certain embodiments, the acrylate oligomers is formed from a second monomer mixture comprising 0-10 wt. % of carboxyl-containing monomers based on the total weight of the second monomer mixture for forming the acrylate oligomers. In certain embodiments, the acrylate oligomers is formed from the second monomer mixture comprising at least 1 wt. % of carboxyl-containing monomers, at least 3 wt. % of carboxyl-containing monomers, at least 5 wt. % of carboxyl-containing monomers, and at least 7 wt. % of carboxyl-containing monomers based on the total weight of the second monomer mixture for forming the acrylate oligomers. In certain embodiments, the second monomer mixture for forming the acrylate oligomers comprises at most 10 wt. % of carboxyl-containing monomers, at most 8 wt. % of carboxyl-containing monomers, at most 7 wt. % of carboxyl-containing monomers, and at most 5 wt. % of carboxyl-containing monomers based on the total weight of the second monomer mixture.

The pressure-sensitive adhesive composition provided by the present invention further comprises a certain content of tackifying resin. More ideally, a terpene tackifying resin is used in the present invention. In certain embodiments, the content of the terpene tackifying resin is 1-20 wt. % based on the total weight of the acrylate copolymers having the side carboxyl and the acrylate oligomers. In certain embodiments, the content of the terpene tackifying resin is at least 1 wt. %, at least 5 wt. %, at least 10 wt. %, and at least 15 wt. % based on the total weight of the acrylate copolymers having the side carboxyl and the acrylate oligomers. In certain embodiments, the content of the terpene tackifying resin is at most 20 wt. %, at most 15 wt. %, and at most 10 wt. % based on the total weight of the acrylate copolymers having the side carboxyl and the acrylate oligomers. If the content of the contained terpene tackifying resin therein is less than 1 wt. %, the anti-warping properties of the prepared pressure-sensitive adhesive sheet are worsened. If the content of the contained terpene tackifying resin therein is greater than 20 wt. %, the anti-bubbling of the prepared pressure-sensitive adhesive sheet is decreased, the initial tackiness is decreased and strip-sliding easily occurs.

In order to improve the cohesive strength of the pressure-sensitive adhesive composition, the pressure-sensitive adhesive composition provided by the present invention further comprises a certain content of crosslinking agent. In certain embodiments, the crosslinking agent can enable the acrylate copolymers having the side carboxyl and the acrylate oligomers having the side carboxyl to be cross-linked, and enhance the compactness of arrangement of high-molecular chains, thereby improving the anti-warping and anti-bubbling properties thereof.

A suitable crosslinking agent can be selected from a group consisting of one or more of multifunctional aziridine, peroxide, benzophenone, triazine, a siloxane compound, diacrylate, triacrylate, tetraacrylate, isocyanate and an epoxy compound.

The amount of the crosslinking agent depends on the adopted formula and the properties to be achieved. In certain embodiments of the present invention, the content of the suitable crosslinking agent is 0.01-2 wt. % based on the total weight of the acrylate copolymers having the side carboxyl and the acrylate oligomers. In certain embodiments, the content of the suitable crosslinking agent is at least 0.01 wt. %, at least 0.05 wt. %, at least 0.1 wt. %, at least 0.5 wt. %, at least 1 wt. %, and at least 1.5 wt. % based on the total weight of the acrylate copolymers having the side carboxyl and the acrylate oligomers. In certain embodiments, the content of the suitable crosslinking agent is at most 2 wt. %, at most 1.8 wt. %, at most 1.5 wt. %, at most 1 wt. %, and at most 0.5 wt. % based on the total weight of the acrylate copolymers having the side carboxyl and the acrylate oligomers.

### Preparation of pressure-sensitive adhesive composition

Preparation methods of the pressure-sensitive adhesive composition are subject to no special limitation, for example, a solution polymerization method, a suspension polymerization method, an emulsion polymerization method or a UV or electron beam initiated polymerization method can be adopted.

The pressure-sensitive adhesive composition of the present invention is prepared through industrially known methods or steps, such as the method mentioned in patent WO200494549A1 (Xia et al.), which comprises the following steps: (1) preparing acrylate copolymers; (2) preparing acrylate oligomers; and (3) mixing the prepared acrylate copolymers and acrylate oligomers, adding a certain amount of crosslinking agent and finally obtaining a desired pressure-sensitive adhesive solution.

### "Preparation of pressure-sensitive adhesive tape

The pressure-sensitive adhesive composition of the present invention can be coated on an appropriate support such as a flexible back lining in the form of a solution prepared after blending and crosslinking of high-molecular-weight and low-glass-transition-temperature (Tg) acrylate copolymers having the side carboxyl, low-molecular-weight and high-Tg acrylate oligomers having the side carboxyl and a terpene tackifying resin. Preferably the pressure-sensitive adhesive composition is coated soon after preparation. Examples of materials which can be contained in the flexible back lining include a polyolefin such as polyethylene, polypropylene (including isotactic polypropylene), polystyrene, polyester, polyvinyl alcohol, poly(poly(ethylene terephthalate), poly(butylene terephthalate), poly(caprolactam), poly(vinylidene fluoride), polylactide, cellulose acetate or ethyecellulose, and the like, the surface of the flexible back lining can also have a special micro-replication structure, such as those described in U.S. Patent Nos. 5141790 (Calhoun et al.), US5296277 (Wilson et al.), US5362516 (Wilson et al.), and so on.

The back lining can also be made of a fabric. Examples of the fabric include fabrics formed by threads made of synthetic or natural materials such as cotton, nylon, rayon, glass and ceramic materials, or nonwoven fabrics such as air-laid webs made of natural or synthetic fibers, or blends thereof. The back lining can also be formed by metal and metallized polymer films, or ceramic sheets can be in the form of any common known articles used with the pressure-sensitive adhesive composition, such as labels, adhesive tapes, advertising boards, covers, marks, and the like.

According to the pressure-sensitive adhesive composition of the present invention, a transfer adhesive film can be provided, wherein at least one side thereof is provided with a release paper (film) which can be used for subsequent adhesion. Or a single-sided or double-sided adhesive tape can be provided, wherein a substrate is contained therein. The substrate can be made of plastic materials such as polyethylene, polypropylene (including isotactic polypropylene), polystyrene, polyester, polyvinyl alcohol, poly(ethylene terephthalate), poly(butylene terephthalate), can also be metallized plastic materials, and/or can also be nonwoven fabrics or metallized nonwoven fabrics, metal foils or composite films of metal foils and the plastic materials, or foam such as acrylic acid foam, polyethylene foam, polyurethane foam and chloroprene foam. The foam can be coextruded with the adhesive and the adhesive can also be attached to one surface or two surfaces of the foam.

Examples of the release paper (film) are well-known in the art and include craft paper coated with organic silicon, glassine or plastic-sprayed craft paper, poly(ethylene terephthalate) and the like (from Monadnock Paper Company, NH, U.S; Loparex Paper Company, Shanghai, and the like). The adhesive tape of the present invention can be mixed with well-known low-adhesion backside (LAB) in the art.

Coating methods which can be adopted in the present invention include, but are not limited to roller coating, flow coating, dip coating, spin coating, spray coating, scrape coating, mold coating and the like. The different coating methods allow the composition to be coated on the substrate with variable thickness, increasing the application range of the composition. The thickness of the coating layer is variable; generally, the coating thickness of dry adhesive is 2-500 micrometers, and more preferably 25-250 micrometers.

The present invention comprises embodiments of the following items:
Item 1 is a pressure-sensitive adhesive composition, which comprises reaction products of the following reaction components: acrylate copolymers having a side carboxyl that is formed by a first monomer mixture containing carboxyl-containing monomers, wherein the content of the carboxyl-containing monomers is 0.1-10 wt. % based on the total weight of the first monomer mixture for forming the acrylate copolymers having the side carboxyl, the glass transition temperature Tg of the acrylate copolymers having the side carboxyl is greater than or equal to -50°C and is less than or equal to -30°C; 1-25 wt. % of acrylate oligomers based on the total weight of the acrylate copolymers having the side carboxyl and the acrylate oligomers, the weight-average molecular weight of the acrylate oligomers is greater than or equal to 20,000 Da and the glass transition temperature Tg thereof is greater than or equal to 80 °C; and 1-20 wt. % of a terpene tackifying resin based on the total weight of the acrylate copolymers having the side carboxyl and the acrylate oligomers.
Item 2 is the composition of item 1, wherein the glass transition temperature Tg of the acrylate copolymers having the side carboxyl is greater than or equal to -50°C and is less than or equal to -40°C.
Item 3 is the composition of item 1, wherein the content of the carboxyl-containing monomers is 1-5 wt. % in the first monomer mixture based on the total weight of the first monomer mixture for forming the acrylate copolymers having the side carboxyl.
Item 4 is the composition of any one of item 1 to item 3, wherein the second monomer mixture for forming the acrylate copolymers having the side carboxyl comprises 0-5 wt. % of nitrogen-containing monomers based on the total weight of the second monomer mixture.
Item 5 is the composition of item 1, wherein the content of the acrylate oligomers is 5-15 wt. % based on the total weight of the acrylate copolymers having the side carboxyl and the acrylate oligomers.
Item 6 is the composition of item 1, wherein the glass transition temperature Tg of the acrylate oligomers is greater than or equal to 80°C and is less than or equal to 105°C.
Item 7 is the composition of item 1, wherein the weight-average molecular weight of the acrylate oligomers is 20,000-100,000 Da.
Item 8 is the composition of item 1, wherein the acrylate oligomers is formed from a second monomer mixture comprising 0-10 wt. % of carboxyl-containing monomers based on the total weight of the second monomer mixture for forming the acrylate oligomers.
Item 9 is the composition of any one of item 1 to item 8, wherein the composition further comprises 0.01-2 wt. % of a crosslinking agent based on the total weight of the acrylate copolymers having the side carboxyl and the acrylate oligomers.
Item 10 is the composition of item 9, wherein the crosslinking agent is selected from a group consisting of one or more of multifunctional aziridine, peroxide, benzophenone, triazine, siloxane compound, diacrylate, triacrylate, tetraacrylate, isocyanate and epoxy compound.
Item 11 is a pressure-sensitive adhesive sheet prepared using the composition of any one of item 1 to item 10, which comprises a substrate and a pressure-sensitive adhesive layer applied to at least one surface of the substrate, wherein the pressure-sensitive adhesive layer is prepared by the composition.
Item 12 is the pressure-sensitive adhesive sheet of item 11, wherein the pressure-sensitive adhesive layer is also applied to the other surface of the substrate.

### EXAMPLES

### Raw materials

Raw materials adopted by the embodiments of the present invention are listed in Table 1:

**Table 1**

| Monomers Identities | Description |
|---|---|
| 2-EHA | 2-ethylhexyl acrylate |
| MA | Methyl acrylate |
| AA | Acrylic acid |
| VAZO-67 | Azodiisobutyronitrile initiator |
| Aziridine crosslinking agent | Crosslinker as described in U.S. Patent No. 6893718 B2 |
| TP2040 | Terpene-phenolic tackifying resin |
| ACM | Acrylamide |
| IBOA | Isobornyl acrylate |
| MMA | Methyl methacrylate |
| BA | N-butyl acrylate |
| BMA | N-butyl methacrylate |
| NNDMA | N,N-dimethylacrylamide |
| DMAEMA | N,N-dimethylaminoethyl methacrylate |
| YS POLYESTER T130 | Terpene-phenolic tackifying resin |
| DERCOLYTE S125 | Beta-pinene-terpene tackifying resin |
| CLEARON K4100 | Hydrogenated aromatic ring modified terpene tackifying resin |
| REGALREZ 1126 | Hydrogenated hydrocarbon tackifying resin |

### Test method

### Room temperature 180°C peel force test

Procedures of the room temperature 180°C peel force tests are as described in ASTM International Standard D3330. The test was achieved with an Instron tensile tester and the peeling speed was 304.8/min. The substrate used for adhering was a polycarbonate (PC) board. The PC board was new and a protection film on one side was torn down to expose a clean surface to be used as an adhering surface. A sample preparation method comprised the steps of rolling a 25.4 mm by 200 mm adhesive tape sample back and forth once using a 1 kg rubber roller to adhere the adhesive tape sample to the surface of the PC board; the prepared sample to be tested was placed in an environment with a temperature of 23°C and relative humidity of 60% for 20 minutes, and then the test was performed.

### 70°C static shear time duration test

Procedures of the static shear time duration test at 70°C are as described in ASTM International Standard D3654. A 1 kg load was loaded below the test sample and then was vertically hung in a 70°C drying oven. A sample preparation method comprised the steps of rolling a 25.4 mm ^{∗} 25.4 mm adhesive tape sample back and forth once using a 1 kg rubber roller to adhere the adhesive tape sample to the surface of a stainless steel board which was cleaned with isopropanol. A time duration recorded during the test was a time duration in which the sample did not fall down from the steel board under the effect of the load. According to the test, the time durations of all examples and comparative examples were longer than 10,000 minutes.

### Anti-warping properties - 90 degree static peel creep test at 70°C

A sample preparation method comprised the steps of rolling a 25.4 mm by 200 mm adhesive tape sample back and forth once using a 1 kg rubber roller to adhere the adhesive tape sample to the surface of a clean PC board, and the prepared adhesive tape sample to be tested was placed horizontally and downwards in a 70°C drying oven for 20 min. A 50 g load was added to one end of the adhesive tape and was allowed to hang freely, and the propagation distance of the adhesive tape from the PC board prior to detachment was recorded after 5 hours. If the distance exceeded 50 mm, the symbol "X" was recorded; if the distance was greater than 25.4 mm and less than 50 mm, the symbol "Δ" was recorded; and if the distance was less than 25.4 mm, the symbol "O" was recorded.

### Anti-Bubbling test

A sample preparation method comprised the steps of rolling a 25.4 mm by 200 mm adhesive tape sample back and forth once by using a 1 kg rubber roller to adhere the adhesive tape sample to the surface of a clean PC board, and the prepared adhesive tape sample to be tested was placed horizontally and downwards in a 70°C drying oven for 24 hours. The anti-bubbling can be obtained through observation of the naked eye. If no bubble was produced between the surface of the adhesive and the PC board, the symbol "O" was recorded; if some small bubbles were produced, the symbol "Δ" was recorded; and if a large amount of bubbles were produced and interfaces were of a whitish hue, the symbol "X" was recorded.

### Molecular weight measurement

The weight-average molecular weight of the polymer was tested by means of a general gel permeation chromatography (GPC) method. The GPC apparatus, obtained from Agilent Technologies, included a high pressure liquid chromatography pump (Agilent 1100), an auto-sampler (MAID #1215), an Agilent 1260 Refractive Index Detector (MAID #1229). The chromatography instrument was equipped with 3 columns, PL-Gel Mixed-B 30 cm x 7.8 mm + PL-Gel Mixed-B 30 cm x 7.8 mm + PL-Gel Mixed-D 30 cm x 7.8 mm.

The polymeric solution for test was prepared by dissolving polymers in tetrahydrofuran with a concentration of 2 wt % and filtering the obtained solution through a 0.2 micrometer polytetraflouroethylene filter (available from VWR International; West Chester, PA). The resulting solution was injected into the GPC and eluted at a rate of 1 milliliter per minute through the columns maintained at 35°C. The system was calibrated with polystyrene standard using a linear least squares analysis to establish a calibration curve. The weight average molecular weight (Mw) was calculated for each sample from the calibration curve.

### Preparation of acrylate copolymers

The following examples A1-A11 were prepared using the following methods. Table 2 shows monomer components of acrylate copolymers.

100 parts of monomers by weight according to the proportions as shown in Table 2, 0.2 parts of an initiator Vazo-67 by weight and 150 parts of ethyl acetate by weight were added into a glass bottle and uniformly mixed, nitrogen gas was introduced for deoxygen for 2 minutes, and then the glass bottle was sealed and placed in a reactor. The mixture was heated to 60°C, reacting was performed for 24 hours while mixing, thereby obtaining the acrylate copolymers with a solid content of about 40%.

**Table 2**

| Samples | 2-EHA | MA | IBOA | BA | AA | ACM | DMAEMA | NNDMA | Tg (°C) |
|---|---|---|---|---|---|---|---|---|---|
| A1 | 45 | 50 | | | 2 | 3 | | | -28 |
| A2 | 93 | | | | 7 | | | | -60 |
| A3 | 45 | 50 | | | 1 | 2 | | | -31 |
| A4 | 82.5 | | 10 | | 2.5 | | | 5 | -51 |
| A5 | 52 | 45 | | | 1 | | 2 | | -36 |
| A6 | 72 | 25 | | | 3 | | | | -49 |
| A7 | 50 | | | 35 | 15 | | | | -47 |
| A8 | 48 | 50 | | | | 2 | | | -33 |
| A9 | 57 | 40 | | | 3 | | | | -36 |
| A10 | 20 | | | 70 | 10 | | | | -47 |
| A11 | 68 | 27 | | | 3 | 2 | | | -45 |

### Preparation of acrylate oligomers

Table 3 shows monomer components of acrylate oligomers. B1-B10 were synthesized as described in Patent application WO9721736. The monomer components, weight-average molecular weights and glass transition temperatures thereof are as shown in Table 3.

**Table 3**

| Samples | MMA | BMA | IBOA | MA | AA | Mw (Da.) | Tg (°C) |
|---|---|---|---|---|---|---|---|
| B1 | 70 | 25 | | | 5 | 46,000 | 80 |
| B2 | | | 97 | | 3 | 22,000 | 88 |
| B3 | | | 90 | | 10 | 29,000 | 90 |
| B4 | 97 | | | | 3 | 43,000 | 105 |
| B5 | | | | 93 | 7 | 42,000 | 10 |
| B6 | 77 | | | 20 | 3 | 32,000 | 25 |
| B7 | 70 | 25 | | | 5 | 165,000 | 80 |
| B8 | 70 | 25 | | | 5 | 67,000 | 80 |
| B9 | 70 | 25 | | | 5 | 29,000 | 80 |
| B10 | 70 | 25 | | | 5 | 14,000 | 80 |

| | | | | | | | |
|---|---|---|---|---|---|---|---|
| * Tg is obtained from the Fox equation. | | | | | | | |

### Example E1

95 parts of A3 by weight, 5 parts of B2 by weight, 5 parts of TP2040 by weight, 0.0005 parts of aziridine crosslinker and a certain amount of ethyl acetate were uniformly mixed to obtain a pressure-sensitive adhesive solution with a solid content of 20%. The pressure-sensitive adhesive solution was coated on the surface of a PET film with a thickness of 50 micrometers and baking was performed for 5 minutes at 105°C to obtain an adhesive layer with a thickness of 17 micrometers. The adhesive layer was covered with a PET release film with a thickness of 38 micrometers and the prepared adhesive tape sample was used as example E1, as shown in Table 4.

### Examples E2-17 and comparative examples CE1-11

The steps for preparing examples E2-17 and comparative examples CE1-11 were substantially the same as the steps for preparing example E1, except that weight contents of acrylate copolymers, acrylate oligomers and tackifying resin (as shown in Table 4) thereof were different from that of embodiment E1. Furthermore examples E6, E7, E16 and E17 are also reference examples in view of claim 1.

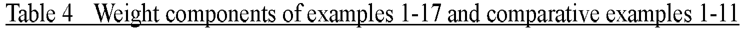

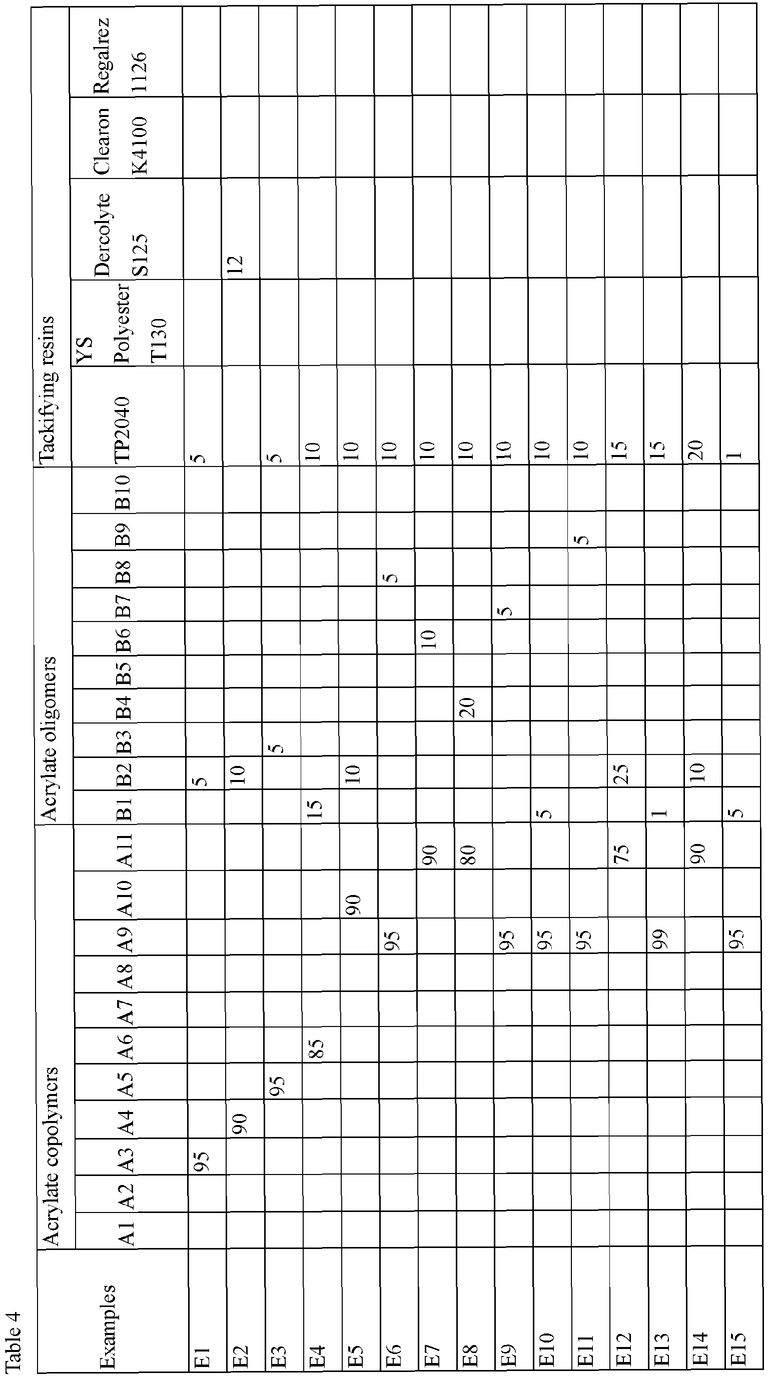

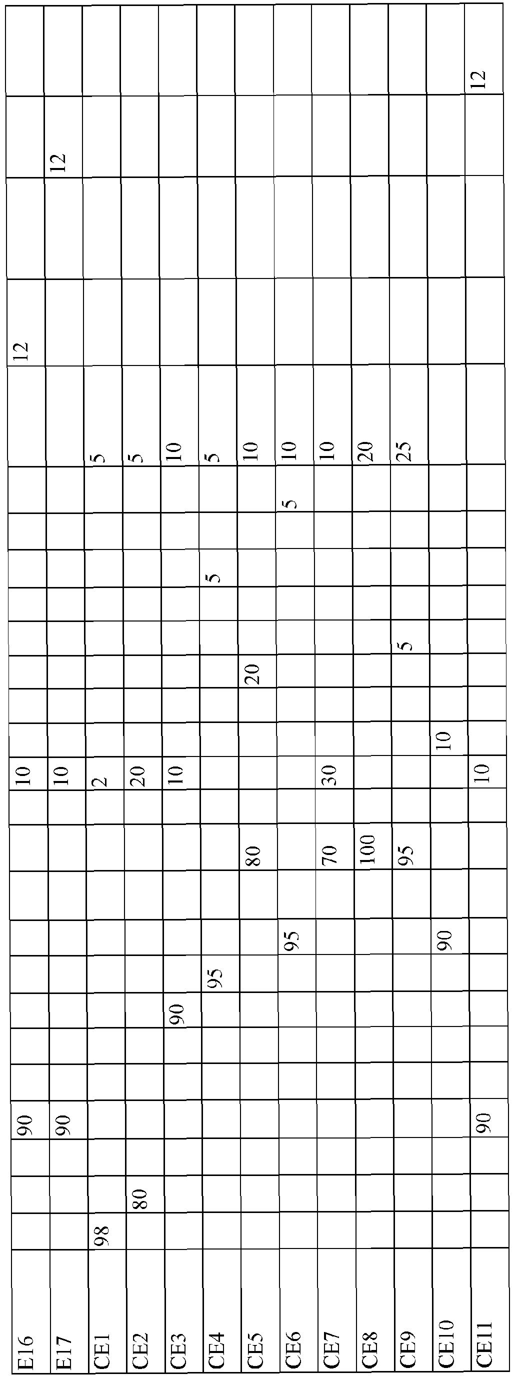

### Table 5 Properties evaluation of examples 1-17 and comparative examples 1-11

**Table 5**

| Samples | Room temperature 180°C peel force (N/mm) | Evaluation | Anti -warping | Anti-bubbling |
|---|---|---|---|---|
| E1 | 0.23 | Adhesive slides | ○ | ○ |
| E2 | 0.62 | | Δ | ○ |
| E3 | 0.87 | | ○ | ○ |
| E4 | 0.49 | | ○ | ○ |
| E5 | 0.63 | | Δ | Δ |
| E6 | 0.51 | | ○ | ○ |
| E7 | 0.7 | | Δ | Δ |
| E8 | 0.41 | | ○ | ○ |
| E9 | 0.66 | Visually hazy | ○ | ○ |
| E10 | 0.33 | | ○ | ○ |
| E11 | 0.62 | | ○ | Δ |
| E12 | 0.27 | Adhesive slides | ○ | Δ |
| E13 | 0.65 | | Δ | ○ |
| E14 | 0.24 | Adhesive slides | ○ | Δ |
| E15 | 0.34 | | Δ | ○ |
| E16 | 0.6 | | ○ | ○ |
| E17 | 0.55 | | ○ | ○ |
| CE1 | 0.08 | Extremely low initial tackiness | ○ | ○ |
| CE2 | 0.1 | Adhesive slides | X | X |
| CE3 | 0.16 | Adhesive slides | X | ○ |
| CE4 | 0.71 | | X | Δ |
| CE5 | 0.64 | | X | Δ |
| CE6 | 0.74 | | ○ | X |
| CE7 | 0.08 | Extremely low initial tackiness | ○ | Δ |
| CE8 | 0.07 | Extremely low initial tackiness | X | X |
| CE9 | 0.24 | Adhesive slides | X | Δ |
| CE10 | 0.59 | | X | ○ |
| CE11 | 0.58 | | X | Δ |

The present invention is described above by means of examples. However, one skilled in the art would understand that the present invention is not limited to the above-mentioned embodiments.

Further, it shall be understood that compounds, compositions, parts, devices and/or methods disclosed and described in the present invention are not limited to specific synthesis methods (unless otherwise clearly indicated) or specific reagents (unless otherwise clearly indicated) because variations can be made thereto.

It shall also be understood that many values are disclosed in the text and each value is modified by "about" in addition to the specific value in itself. It also shall be understood that one end point of each range is meaningful when being correlated to the other end point or independent of the other end point. All numerical ranges included in the text and expressed by end point values include the end point values of the ranges, all end point values can be combined and the numerical ranges after combination also fall into the range of the present invention. The advantages of the present invention are further described in the above-mentioned nonrestrictive embodiments. However, specific materials and usage amounts thereof and other experimental conditions adopted in the embodiments shall not be understood as limitations to the present invention. Unless otherwise clearly indicated, all parts, percentages, ratios and the like are by weight.

## Claims

1. A pressure-sensitive adhesive composition, comprising the reaction products of the following reaction components:
acrylate copolymers having a side carboxyl, formed by a first monomer mixture containing a carboxyl-containing monomer, wherein, the content of the carboxyl-containing monomer is 0.1-10 wt. % based on the total weight of the first monomer mixture for forming the acrylate copolymer having the side carboxyl, the glass transition temperature Tg of the acrylate copolymer having the side carboxyl is greater than or equal to -50°C and less than or equal to -30°C;
1-25 wt. % of an acrylate oligomer based on the total weight of the acrylate copolymer having the side carboxyl and the acrylate oligomer, the weight-average molecular weight of the acrylate oligomer is greater than or equal to 20,000 Da, the glass transition temperature Tg thereof is greater than or equal to 80°C; and
1-20 wt. % of a terpene tackifying resin based on the total weight of the acrylate copolymer having the side carboxyl and the acrylate oligomer, wherein the Tg is obtained by Fox equation and the weight average molecular weight is tested by GPC method.

2. The composition according to claim 1, wherein the acrylate copolymer having the side carboxyl has a glass transition temperature Tg greater than or equal to -50°C and less than or equal to -40°C.

3. The composition according to claim 1, wherein the content of the carboxyl-containing monomer is 1-5 wt % based on the total weight of the first monomer mixture for forming the acrylate copolymer having the side carboxyl.

4. The composition according to any one of claims 1 to 3, wherein the first monomer mixture for forming the acrylate copolymer having the side carboxyl further comprises a nitrogen-containing monomer of 0-5 wt % based on the total weight of the first monomer mixture for forming the acrylate copolymer having the side carboxyl.

5. The composition according to claim 1, wherein the content of the acrylate oligomer is 5-15 wt % based on the total weight of the acrylate copolymer having the side carboxyl and the acrylate oligomer.

6. The composition according to claim 1, wherein the glass transition temperature Tg of the acrylate oligomer is greater than or equal to 80°C and less than or equal to 105°C.

7. The composition according to claim 1, wherein the weight-average molecular weight of the acrylate oligomer is 20,000-200,000 Da.

8. The composition according to claim 1, wherein the acrylate oligomer is formed from a second monomer mixture comprising a carboxyl-containing monomer of 0-10 wt% based on the total weight of the second monomer mixture for forming the acrylate oligomer.

9. The composition according to any one of claims 1 to 8, wherein the composition further comprises a cross-linking agent of 0.01-2 wt % based on the total weight of the acrylate copolymer having the side carboxyl and the acrylate oligomer.

10. The composition according to claim 9, wherein the cross-linking agent is one or more selected from the group consisting of multifunctional aziridine, peroxide, benzophenone, triazine, siloxane compound, diacrylate, tricrylate, tetracrylate, isocyante, and epoxy compound.

11. A pressure-sensitive adhesive sheet prepared using the composition according to any one of claims 1 to 10, comprising a substrate and a pressure-sensitive adhesive layer applied on at least one surface of the substrate, wherein the pressure-sensitive adhesive layer is prepared using the composition.

12. The pressure-sensitive adhesive sheet according to claim 11, wherein the pressure-sensitive adhesive layer is also applied on another surface of the substrate.

## Patentansprüche

1. Druckempfindliche Klebstoffzusammensetzung, umfassend die Reaktionsprodukte der folgenden Reaktionskomponenten:
Acrylatcopolymere mit einem seitenständigen Carboxyl, gebildet durch eine erste Monomermischung, die ein carboxylhaltiges Monomer enthält, wobei der Gehalt des carboxylhaltigen Monomers bezogen auf das Gesamtgewicht der ersten Monomermischung 0,1-10 Gew.-% beträgt, zum Bilden des Acrylatcopolymers mit dem seitenständigen Carboxyl, wobei die Glasübergangstemperatur Tg des Acrylatcopolymers mit dem seitenständigen Carboxyl höher als oder gleich -50 °C und niedriger als oder gleich -30 °C ist;
bezogen auf das Gesamtgewicht des Acrylatcopolymers mit dem seitenständigen Carboxyl und dem Acrylatoligomer 1-25 Gew.-% eines Acrylatoligomers, wobei das gewichtsgemittelte Molekulargewicht des Acrylatoligomers höher als oder gleich 20.000 Da ist, wobei die Glasübergangstemperatur Tg davon höher als oder gleich 80 °C ist; und
bezogen auf das Gesamtgewicht des Acrylatcopolymers mit dem seitenständigen Carboxyl und dem Acrylatoligomer 1-20 Gew.-% eines klebrigmachenden Terpenharzes, wobei die Tg durch die Fox-Gleichung erhalten wird und das gewichtsgemittelte Molekulargewicht durch das GPC-Verfahren geprüft wird.

2. Zusammensetzung nach Anspruch 1, wobei das Acrylatcopolymer mit dem seitenständigen Carboxyl eine Glasübergangstemperatur Tg höher als oder gleich -50 °C und niedriger als oder gleich -40 °C aufweist.

3. Zusammensetzung nach Anspruch 1, wobei der Gehalt des carboxylhaltigen Monomers zum Bilden des Acrylatcopolymers mit dem seitenständigen Carboxyl bezogen auf das Gesamtgewicht der ersten Monomermischung 1-5 Gew.-% beträgt.

4. Zusammensetzung nach einem der Ansprüche 1 bis 3, wobei die erste Monomermischung zum Bilden des Acrylatcopolymers mit dem seitenständigen Carboxyl ferner bezogen auf das Gesamtgewicht der ersten Monomermischung zum Bilden des Acrylatcopolymers mit dem seitenständigen Carboxyl ein stickstoffhaltiges Monomer mit 0-5 Gew.-% umfasst.

5. Zusammensetzung nach Anspruch 1, wobei der Gehalt des Acrylatoligomers bezogen auf das Gesamtgewicht des Acrylatcopolymers mit dem seitenständigen Carboxyl und dem Acrylatoligomer 5-15 Gew.-% beträgt.

6. Zusammensetzung nach Anspruch 1, wobei die Glasübergangstemperatur Tg des Acrylatoligomers höher als oder gleich 80 °C und niedriger als oder gleich 105 °C ist.

7. Zusammensetzung nach Anspruch 1, wobei das gewichtsgemittelte Molekulargewicht des Acrylatoligomers 20.000-200.000 Da beträgt.

8. Zusammensetzung nach Anspruch 1, wobei das Acrylatoligomer aus einer zweiten Monomermischung gebildet ist, die bezogen auf das Gesamtgewicht der zweiten Monomermischung zum Bilden des Acrylatoligomers ein carboxylhaltiges Monomer mit 0-10 Gew.-% umfasst.

9. Zusammensetzung nach einem der Ansprüche 1 bis 8, wobei die Zusammensetzung ferner bezogen auf das Gesamtgewicht des Acrylatcopolymers mit dem seitenständigen Carboxyl und dem Acrylatoligomer ein Vernetzungsmittel mit 0,01-2 Gew.-% umfasst.

10. Zusammensetzung nach Anspruch 9, wobei das Vernetzungsmittel eines oder mehrere ausgewählt aus der Gruppe, bestehend aus multifunktionellem Aziridin, Peroxid, Benzophenon, Triazin, Siloxanverbindung, Diacrylat, Tricrylat, Tetracrylat, Isocyanat und Epoxyverbindung ist.

11. Druckempfindliches Klebstoffflächengebilde, hergestellt unter Verwendung der Zusammensetzung nach einem der Ansprüche 1 bis 10, umfassend ein Substrat und eine auf mindestens einer Oberfläche des Substrats aufgetragene druckempfindliche Klebstoffschicht, wobei die druckempfindliche Klebstoffschicht unter Verwendung der Zusammensetzung hergestellt wird.

12. Druckempfindliches Klebstoffflächengebilde nach Anspruch 11, wobei die druckempfindliche Klebstoffschicht auch auf einer anderen Oberfläche des Substrats aufgetragen ist.

## Revendications

1. Composition d'adhésif sensible à la pression, comprenant les produits de réaction des composants de réaction suivants :
des copolymères acrylate ayant un carboxyle latéral, formés par un premier mélange de monomères contenant un monomère contenant du carboxyle, dans laquelle, la teneur du monomère contenant du carboxyle va de 0,1 à 10 % en poids sur la base du poids total du premier mélange de monomères pour former le copolymère acrylate ayant le carboxyle latéral, la température de transition vitreuse Tg du copolymère acrylate ayant le carboxyle latéral est supérieure ou égale à -50 °C et inférieure ou égale à -30 °C ;
1 à 25 % en poids d'un oligomère acrylate sur la base du poids total du copolymère acrylate ayant le carboxyle latéral et de l'oligomère acrylate, la masse moléculaire moyenne en poids de l'oligomère acrylate est supérieure ou égale à 20 000 Da, la température de transition vitreuse Tg de celui-ci est supérieure ou égale à 80 °C ; et
1 à 20 % en poids d'une résine poisseuse de terpène sur la base du poids total du copolymère acrylate ayant le carboxyle latéral et de l'oligomère acrylate, dans laquelle la Tg est obtenue par l'équation de Fox et la masse moléculaire moyenne en poids est testée par un procédé GPC.

2. Composition selon la revendication 1, dans laquelle le copolymère acrylate ayant le carboxyle latéral a une température de transition vitreuse Tg supérieure ou égale à -50 °C et inférieure ou égale à -40 °C.

3. Composition selon la revendication 1, dans laquelle la teneur du monomère contenant du carboxyle va de 1 à 5 % en poids sur la base du poids total du premier mélange de monomères pour former le copolymère acrylate ayant le carboxyle latéral.

4. Composition selon l'une quelconque des revendications 1 à 3, dans laquelle le premier mélange de monomères pour former le copolymère acrylate ayant le carboxyle latéral comprend en outre un monomère contenant de l'azote à raison de 0 à 5 % en poids sur la base du poids total du premier mélange de monomères pour former le copolymère acrylate ayant le carboxyle latéral.

5. Composition selon la revendication 1, dans laquelle la teneur de l'oligomère acrylate va de 5 à 15 % en poids sur la base du poids total du copolymère acrylate ayant le carboxyle latéral et de l'oligomère acrylate.

6. Composition selon la revendication 1, dans laquelle la température de transition vitreuse Tg de l'oligomère acrylate est supérieure ou égale à 80 °C et inférieure ou égale à 105 °C.

7. Composition selon la revendication 1, dans laquelle la masse moléculaire moyenne en poids de l'oligomère acrylate va de 20 000 à 200 000 Da.

8. Composition selon la revendication 1, dans laquelle l'oligomère acrylate est formé à partir d'un deuxième mélange de monomères comprenant un monomère contenant du carboxyle à raison de 0 à 10 % en poids sur la base du poids total du deuxième mélange de monomères pour former l'oligomère acrylate.

9. Composition selon l'une quelconque des revendications 1 à 8, dans laquelle la composition comprend en outre un agent de réticulation à raison de 0,01 à 2 % en poids sur la base du poids total du copolymère acrylate ayant le carboxyle latéral et de l'oligomère acrylate.

10. Composition selon la revendication 9, dans laquelle l'agent de réticulation est un ou plusieurs choisis dans le groupe constitué d'aziridine multifonctionnelle, peroxyde, benzophénone, triazine, composé de siloxane, diacrylate, tricrylate, tétracrylate, isocyanate et composé époxy.

11. Feuille d'adhésif sensible à la pression préparée en utilisant la composition selon l'une quelconque des revendications 1 à 10, comprenant un substrat et une couche d'adhésif sensible à la pression appliquée sur au moins une surface du substrat, dans laquelle la couche d'adhésif sensible à la pression est préparée en utilisant la composition.

12. Feuille d'adhésif sensible à la pression selon la revendication 11, dans laquelle la couche d'adhésif sensible à la pression est également appliquée sur une autre surface du substrat.
